# EUROPEAN PATENT APPLICATION

(11) **EP 1 780 388 A1**
(43) Date of publication of application: **02.05.2007**
(21) Application number: 05758119.1
(22) Date of filing: 29.06.2005
(51) Int. Cl.: F02C 7/22, F02C 3/22, F02C 6/18, F02G 5/02, H01M 8/06, C01B 3/22

(54) **WASTE HEAT RECOVERING APPARATUS, WASTE HEAT RECOVERING SYSTEM AND WASTE HEAT RECOVERING METHOD**

(30) Priority: 30.06.2004 JP 2004193249; 13.04.2005 JP 2005116222
(71) Applicant: JFE Holdings, Inc., Chiyoda-ku, Tokyo 100-0005 (JP)
(72) Inventor: NAKAGAWA, Tsuguhiko c/o JFE Holdings, Inc., Chiyoda-ku, Tokyo 1000005 (JP); HAYASHI, Hiromasa c/o JFE R & D CORPORATION, kanagawa 2100855 (JP)
(74) Representative: HOFFMANN EITLE
(86) International application number: PCT/JP2005/012440
(87) International publication number: WO 2006/004141

(57) **Abstract**

A heat exchanger filled with a catalyst used for reforming DME is provided in an exhaust system of a combustion apparatus such as a furnace, an internal combustion engine, or electric power generation equipment. A mixed gas of DME and H₂O is fed to the heat exchanger, thereby pyrolyzing the DME and recovering the sensible heat of an exhaust gas of the furnace or the internal combustion engine as H₂ fuel. Since the waste heat is recovered not as steam, hot water, heated air, or the like, but as H₂ fuel or H₂ and CO fuel, the application of the recovered energy is not limited.

## Description

### Technical Field

The present invention relates to a method of recovering waste heat discharged from various industrial facilities, and in particular, to a waste heat recovery apparatus for recovering waste heat of an exhaust gas discharged from a combustion apparatus such as a furnace, an internal combustion engine, or electric power generation equipment, and a method therefor.

### Background Art

There have been continued efforts focused on recovering waste heat of an exhaust gas discharged from combustion apparatuses such as various furnaces examples of which are a combustion furnace that burns fuel, an internal combustion engine, and electric power generation equipment to achieve satisfactory energy saving.

In general, as a method of recovering waste heat of an exhaust gas, a method of recovering the sensible heat of the exhaust gas as thermal energy is employed. Specifically, a heat exchanger is disposed in an exhaust system of a combustion apparatus, a heat recovery medium passes through the heat exchanger, and the heat recovery medium is heated by the exhaust gas, thereby recovering the sensible heat of the exhaust gas as thermal energy. For example, in a waste heat boiler, water is used as a heat exchange medium, and the sensible heat of the exhaust gas is recovered as thermal energy of low-pressure steam or hot water. In a recuperator and a regenerative burner, air is used as a heat exchange medium, and the sensible heat of the exhaust gas is recovered as thermal energy of heated air that has been preheated.

A characteristic of waste heat that affects the waste heat recovery technique is its low energy density. In some cases, the temperature of an exhaust gas is 300°C or lower. In such a case, when heat exchange is performed from the exhaust gas to a heat exchange medium, at most, thermal energy in the range of 200°C to 250°C is recovered. Thermal energy having a low energy density can be used only as a low-temperature heating source. In order to recover waste heat with high efficiency to overcome this problem, a heat exchanger with a large heat transfer area is required, and thus the size of the waste heat recovery apparatus tends to increase.

Another problem with the waste heat recovery technique is that the application of the waste heat recovery technique is limited to combustion air, a low-temperature heating source, or the like, and the application site may be limited to areas near the recovered heat source (when heated air or steam is transported over a long distance with a pipe or the like, heat dissipation is increased and the recovered heat may not be effectively used). For this reason, in particular, when the temperature of an exhaust gas is low, it is extremely difficult to economically establish the waste heat recovery technique.

On the other hand, recently, a fuel cell in which H₂ fuel is electrochemically reacted with oxygen in air to directly generate electric power has been practically used. As a method of obtaining the H₂ fuel of the fuel cell, a method of reforming CₙHₘ components contained in coke oven gas in a steel works utilizing the sensible heat of the coke oven gas to recover H₂ and CO has been developed (see Japanese Unexamined Patent Application Publication No. 2002-212575). In this method, however, the H₂ fuel cannot be produced without a coke oven. Therefore, this method cannot be used for a general-purpose H₂ fuel source for fuel cells or the like in the future.

### Disclosure of Invention

It is an object of the present invention to provide a novel waste heat recovery apparatus, a waste heat recovery system, and a method of recovering waste heat that can recover the sensible heat of an exhaust gas discharged from a combustion apparatus such as a furnace, an internal combustion engine, or electric power generation equipment as fuel such as H₂ fuel.

To achieve the above object, the present invention provides the following waste heat recovery apparatuses, waste heat recovery systems, and methods of recovering waste heat:
(1) A waste heat recovery apparatus wherein a heat exchanger filled with a catalyst used for reforming dimethyl ether (DME) is provided in an exhaust system of a combustion apparatus such as a furnace, an internal combustion engine, or electric power generation equipment; and a mixed gas of dimethyl ether and H₂O is fed to the heat exchanger, thereby pyrolyzing the dimethyl ether and recovering the sensible heat of an exhaust gas of the combustion apparatus as H₂ fuel.
(2) The waste heat recovery apparatus according to item (1), wherein dimethyl ether is fed to the exhaust system so as to increase the temperature of the exhaust gas of the combustion apparatus.
(3) A waste heat recovery apparatus wherein a heat exchanger filled with a catalyst used for reforming dimethyl ether is provided in an exhaust system of a combustion apparatus such as a furnace, an internal combustion engine, or electric power generation equipment; and a mixed gas of dimethyl ether and CO₂ is fed to the heat exchanger, thereby pyrolyzing the dimethyl ether and recovering the sensible heat of an exhaust gas of the combustion apparatus as H₂ and CO fuel.
(4) The waste heat recovery apparatus according to item (3), wherein the exhaust gas containing CO₂ of the combustion apparatus is dehydrated and deoxidized, and a mixed gas of the dehydrated and deoxidized exhaust gas and dimethyl ether is fed to the heat exchanger.
(5) A waste heat recovery apparatus wherein a first heat exchanger filled with a catalyst used for reforming dimethyl ether is provided in an exhaust system of a combustion apparatus such as a furnace, an internal combustion engine, or electric power generation equipment; a mixed gas of dimethyl ether and CO₂ is fed to the first heat exchanger, thereby pyrolyzing the dimethyl ether and recovering the sensible heat of an exhaust gas of the combustion apparatus as H₂ and CO fuel; a second heat exchanger filled with a catalyst used for reforming dimethyl ether is provided in the exhaust system; and a mixed gas of dimethyl ether and H₂O is fed to the second heat exchanger, thereby pyrolyzing the dimethyl ether and recovering the sensible heat of the exhaust gas of the combustion apparatus as H₂ fuel.
(6) The waste heat recovery apparatus according to item (5), wherein the H₂ and CO fuel recovered in the first heat exchanger is fed to the exhaust system disposed between the first heat exchanger and the second heat exchanger so as to increase the temperature of the exhaust gas of the combustion apparatus to be fed to the second heat exchanger.
(7) The waste heat recovery apparatus according to item (5) or (6), wherein CO₂ produced together with the H₂ fuel recovered in the second heat exchanger is separated, and the separated CO₂ is supplied to the first heat exchanger.
(8) The waste heat recovery apparatus according to any one of items (1) to (7), wherein the combustion apparatus is a gas turbine, a gas engine, or a diesel engine, and the recovered H₂ fuel or the H₂ and CO fuel is used as fuel of the gas turbine, the gas engine, or the diesel engine.
(9) The waste heat recovery apparatus according to any one of items (1) to (7), wherein the recovered H₂ fuel or the H₂ and CO fuel is used as an alternative to a by-product gas in a steel works.
(10) The waste heat recovery apparatus according to any one of items (1) to (7), wherein the recovered H₂ fuel or the H₂ and CO fuel is used as fuel of a fuel cell.
(11) A waste heat recovery system including a combustion apparatus such as a furnace, an internal combustion engine, or electric power generation equipment; and a waste heat recovery apparatus for recovering the sensible heat of an exhaust gas of the combustion apparatus, wherein, in the waste heat recovery apparatus, a heat exchanger filled with a catalyst used for reforming dimethyl ether is provided in an exhaust system of the combustion apparatus, and a mixed gas of dimethyl ether and H₂O is fed to the heat exchanger, thereby pyrolyzing the dimethyl ether and recovering the sensible heat of the exhaust gas of the combustion apparatus as H₂ fuel.
(12) A waste heat recovery system including a combustion apparatus such as a furnace, an internal combustion engine, or electric power generation equipment; and a waste heat recovery apparatus for recovering the sensible heat of an exhaust gas of the combustion apparatus, wherein, in the waste heat recovery apparatus, a heat exchanger filled with a catalyst used for reforming dimethyl ether is provided in an exhaust system of the combustion apparatus, and a mixed gas of dimethyl ether and CO₂ is fed to the heat exchanger, thereby pyrolyzing the dimethyl ether and recovering the sensible heat of the exhaust gas of the combustion apparatus as H₂ and CO fuel.
(13) A waste heat recovery system including a combustion apparatus such as a furnace, an internal combustion engine, or electric power generation equipment; and a waste heat recovery apparatus for recovering the sensible heat of an exhaust gas of the combustion apparatus, wherein, in the waste heat recovery apparatus, a first heat exchanger filled with a catalyst used for reforming dimethyl ether is provided in an exhaust system of the combustion apparatus, a mixed gas of dimethyl ether and CO₂ is fed to the first heat exchanger, thereby pyrolyzing the dimethyl ether and recovering the sensible heat of the exhaust gas of the combustion apparatus as H₂ and CO fuel, a second heat exchanger filled,with a catalyst used for reforming dimethyl ether is provided in the exhaust system, a mixed gas of dimethyl ether and H₂O is fed to the second heat exchanger, thereby pyrolyzing the dimethyl ether and recovering the sensible heat of the exhaust gas of the combustion apparatus as H₂ fuel, CO₂ produced together with the H₂ fuel recovered in the second heat exchanger is separated, and the separated CO₂ is supplied to the first heat exchanger.
(14) The waste heat recovery system according to any one of claims 11 to 13, wherein the combustion apparatus uses liquefied natural gas (LNG) as fuel.
(15) The waste heat recovery system according to any one of items (11) to (14), further including a heating furnace or a combustion apparatus for combusting the recovered H₂ and CO fuel.
(16) The waste heat recovery system according to any one of items (13) to (15), further including a waste heat boiler disposed at a downstream side of the second heat exchanger of the exhaust system, and water vapor recovered in the waste heat boiler is supplied to the second heat exchanger.
(17) A method of recovering waste heat including feeding a mixed gas of dimethyl ether and H₂O to a heat exchanger that is filled with a catalyst used for reforming the dimethyl ether and that is provided in an exhaust system of a combustion apparatus such as a furnace, an internal combustion engine, or electric power generation equipment, thereby pyrolyzing the dimethyl ether and recovering the sensible heat of an exhaust gas of the combustion apparatus as H₂ fuel.
(18) A method of recovering waste heat including feeding a mixed gas of dimethyl ether and CO₂ to a heat exchanger that is filled with a catalyst used for reforming the dimethyl ether and that is provided in an exhaust system of a combustion apparatus such as a furnace, an internal combustion engine, or electric power generation equipment, thereby pyrolyzing the dimethyl ether and recovering the sensible heat of an exhaust gas of the combustion apparatus as H₂ and CO fuel.
(19) A method of recovering waste heat including feeding a mixed gas of dimethyl ether and CO₂ to a first heat exchanger that is filled with a catalyst used for reforming the dimethyl ether and that is provided in an exhaust system of a combustion apparatus such as a furnace, an internal combustion engine, or electric power generation equipment, thereby pyrolyzing the dimethyl ether and recovering the sensible heat of the exhaust gas of the combustion apparatus as H₂ and CO fuel; feeding a mixed gas of dimethyl ether and H₂O to a second heat exchanger that is filled with a catalyst used for reforming dimethyl ether and that is provided in the exhaust system, thereby pyrolyzing the dimethyl ether and recovering the sensible heat of the exhaust gas of the combustion apparatus as H₂ fuel; separating CO₂ produced together with the H₂ fuel recovered in the first heat exchanger; and supplying the separated CO₂ to the second heat exchanger.
(20) A method of recovering waste heat including feeding dimethyl ether to an exhaust system of a combustion apparatus such as a furnace, an internal combustion engine, or electric power generation equipment, the exhaust system being filled with a catalyst used for reforming the dimethyl ether, thereby pyrolyzing the dimethyl ether and recovering the sensible heat of an exhaust gas of the combustion apparatus as H₂ fuel.
(21) A method of recovering waste heat including feeding dimethyl ether to an exhaust system of a combustion apparatus such as a furnace, an internal combustion engine, or electric power generation equipment, the exhaust system being filled with a catalyst used for reforming the dimethyl ether, thereby pyrolyzing the dimethyl ether and recovering the sensible heat of an exhaust gas of the combustion apparatus as H₂ and CO fuel.

According to the inventions described in any one of items (1) to (7), waste heat of the combustion apparatus is recovered not as steam, hot water, heated air, or the like, but as H₂ fuel or H₂ and CO fuel. Therefore, the application of the recovered energy is not limited (that is, since the waste heat is recovered as combustion heat of the fuel, the recovered energy is not decreased even when the fuel is transported over a long distance). In addition, dimethyl ether is reformed to produce H₂ fuel using the sensible heat of an exhaust gas, the energy conversion efficiency in the conversion of the dimethyl ether to H₂ can be increased (for example, even when the temperature of the exhaust gas is low, i.e., in the range of 250°C to 300°C, the energy conversion efficiency reaches 90% or more). Furthermore, since waste heat can be recovered as fuel with a high added value, even when the temperature of the exhaust gas is low (for example, even when the temperature of the exhaust gas is 300°C or lower), economically efficient heat recovery can be performed. Furthermore, since only the presence of an exhaust gas, dimethyl ether, and H₂O or CO₂ can generate H₂ fuel, a general-purpose H₂ fuel generator can be provided and a social system in which a large amount of H₂ fuel is consumed can be realized.

According to the invention described in item (8), the H₂ fuel or H₂ and CO fuel can be used as fuel for a gas turbine, a gas engine, or a diesel engine.

According to the invention described in item (9), since the composition and the calorific value of the resulting H₂ fuel or H₂ and CO fuel are similar to those of a by-product gas in steel workss, the fuel can be used as an alternative to the by-product gas in the case where the amount of by-product gas generated is low because of stopping of the operation of a blast furnace or the like without remodeling existing combustion equipment. Thus, the operation efficiency of the by-product gas can be increased in the steel workss.

According to the invention described in item (10), the resulting H₂ fuel or the H₂ and CO fuel can be used as fuel of a fuel cell.

According to the invention described in item (11) or (12), a waste heat recovery system that can recover waste heat of a combustion apparatus as H₂ fuel or H₂ and CO fuel can be provided.

According to the invention described in item (13), CO₂ generated together with the H₂ fuel recovered in the second heat exchanger is separated, and the separated CO₂ is supplied to the first heat exchanger. Accordingly, CO₂ is circulated, and thus the CO₂ emission can be reduced.

According to the invention described in item (14), by using LNG, whose carbon emission is lower than that of dimethyl ether, as the fuel of the combustion apparatus, the CO₂ emission can be reduced.

According to the invention described in item (15), the recovered H₂ and CO fuel can be used as fuel of a combustion apparatus such as a heating furnace or a boiler.

According to the invention described in item (16), steam to be supplied to the second heat exchanger can be recovered with the waste heat boiler.

According to the invention described in item (17) or (18), waste heat is recovered not as steam, hot water, heated air, or the like, but as H₂ fuel or H₂ and CO fuel. Therefore, the application of the recovered energy is not limited (that is, since the waste heat is recovered as combustion heat of the fuel, the recovered energy is not decreased even when the fuel is transported over a long distance).

According to the invention described in item (19), CO₂ generated together with the H₂ fuel recovered in the second heat exchanger is separated, and the separated CO₂ is supplied to the first heat exchanger. Accordingly, CO₂ is circulated, and thus the CO₂ emission can be reduced.

As described in item (20) or (21), dimethyl ether may be directly fed to an exhaust system.

### Brief Description of the Drawings

Fig. 1 is a diagram showing a waste heat recovery apparatus according to a first embodiment of the present invention.
Fig. 2 is a schematic view showing a tubular heat exchanger (recuperator).
Fig. 3 is a schematic view showing a regenerative heat exchanger (switching type).
Fig. 4 is a schematic view showing a regenerative heat exchanger (rotary type).
Fig. 5 includes schematic views showing fluidized-bed and heating-medium-circulating heat exchangers. Fig. 5a shows the fluidized-bed heat exchanger, and Fig. 5b shows the heating-medium-circulating heat exchanger.
Fig. 6 is a diagram showing a characteristic of reforming of DME to produce hydrogen.
Fig. 7 is a diagram showing an example of an estimation of the energy conversion efficiency when DME is converted into H₂.
Fig. 8 is a diagram showing a waste heat recovery apparatus according to a second embodiment of the present invention.
Fig. 9 is a diagram showing a waste heat recovery apparatus according to a third embodiment of the present invention.
Fig. 10 is a diagram showing a waste heat recovery apparatus according to a fourth embodiment of the present invention.
Fig. 11 is a diagram of a waste heat recovery system (combined waste heat recovery system of LNG and DME) according to a first embodiment of the present invention.
Fig. 12 includes diagrams of a waste heat recovery system in which only LNG is used. Fig. 12a is a diagram of the waste heat recovery system in which LNG is used as fuel of a heating furnace, Fig. 12b is a diagram of the waste heat recovery system in which LNG is used as fuel of a gas engine power generator, and Fig. 12c is a diagram of the waste heat recovery system in which LNG is used for a reformer.
Fig. 13 is a diagram of a waste heat recovery system according to a second embodiment of the present invention.

### Best Mode for Carrying Out the Invention

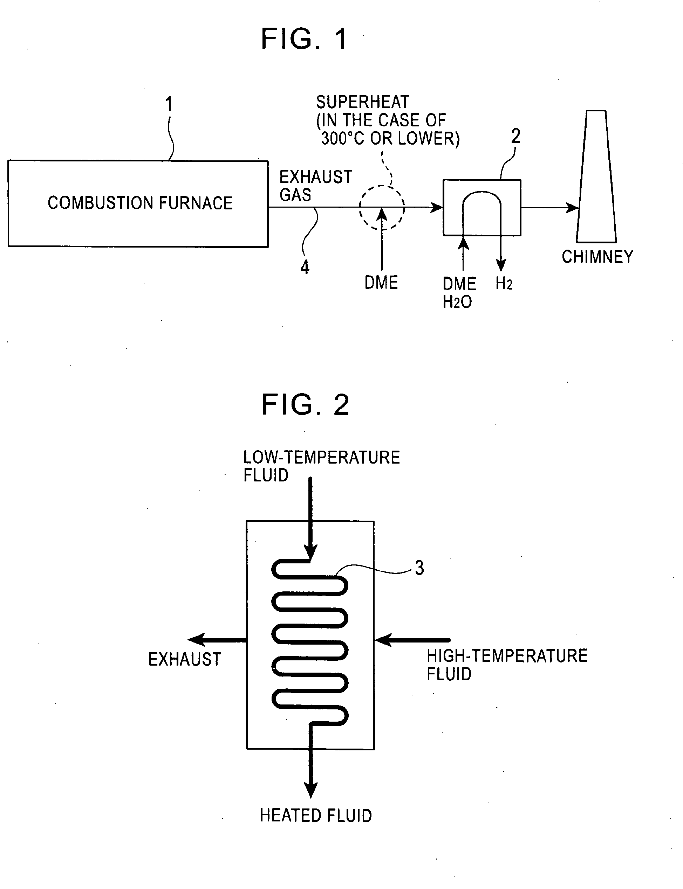

Embodiments of the present invention will now be described. Fig. 1 shows a waste heat recovery apparatus according to a first embodiment of the present invention. A heat exchanger 2 is provided in an exhaust system 4 of a combustion furnace 1. A mixed gas of dimethyl ether (hereinafter referred to as "DME") and water vapor (hereinafter referred to as "H₂O") is fed to the heat exchanger 2: By performing heat exchange between an exhaust gas and DME in the heat exchanger 2, DME is pyrolyzed to H₂, and the sensible heat of the exhaust gas is recovered as H₂ fuel.

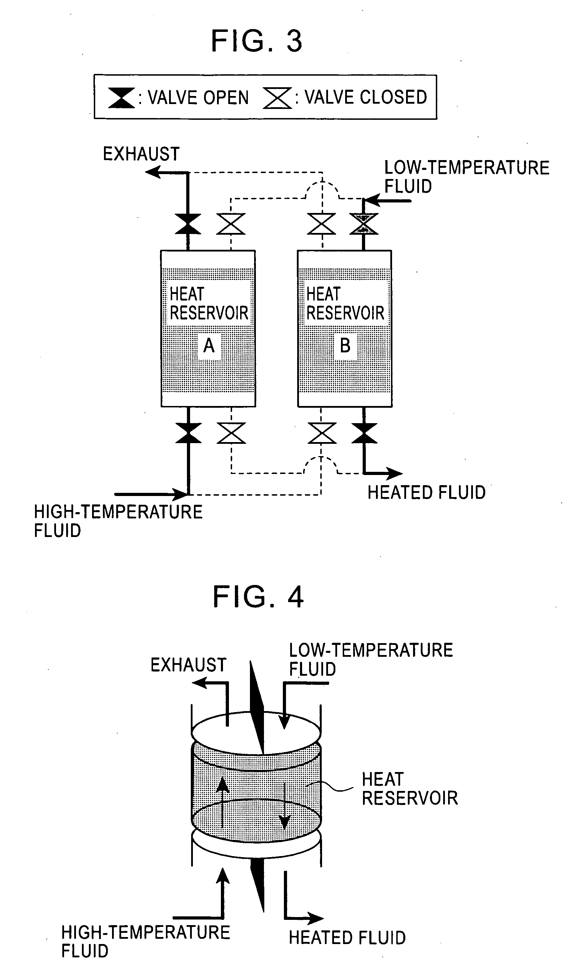

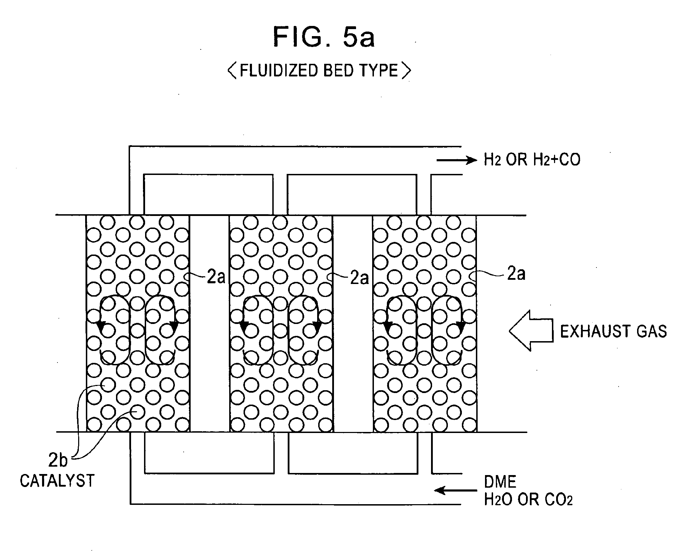

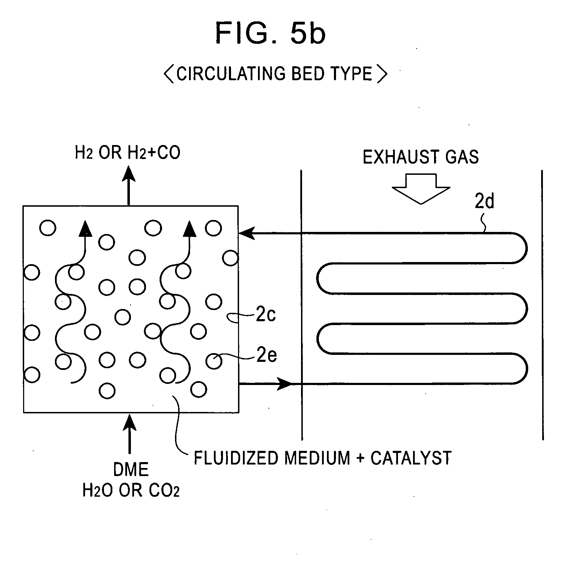

Various types of heat exchanger such as tubular type, plate type, extended heat transfer surface type, regenerative type, fluidized bed type, and heating medium circulating type can be used as the heat exchanger 2. Fig. 2 shows an example of a tubular heat exchanger (recovery heat exchanger called recuperator), Figs. 3 and 4 show regenerative heat exchangers, and Fig. 5 shows fluidized-bed and heating-medium-circulating heat exchangers.

In the recuperator shown in Fig. 2, an exhaust gas and a mixed gas of DME and H₂O are separated by a heat transfer tube 3 serving as a solid wall. The mixed gas of DME and H₂O, which is a low-temperature fluid, flows inside the heat transfer tube 3, and the exhaust gas, which is a high-temperature fluid, flows outside the heat transfer tube 3. Heat exchange is performed by indirectly bringing the mixed gas into contact with the exhaust gas. The sensible heat of the exhaust gas is transferred to the mixed gas of DME and H₂O via the heat transfer tube 3 by radiation and conduction.

Fig. 3 shows a switching regenerative heat exchanger. The operation of this regenerative heat exchanger will be described to facilitate understanding thereof. First, an exhaust gas, which is a high-temperature fluid, is supplied to a heat reservoir A composed of alumina balls, a honeycomb material, or the like to heat the heat reservoir A. When the heat reservoir A is heated to a certain degree, valves are switched, and a mixed gas of DME and H₂O, which is a low-temperature fluid, is supplied to the heated heat reservoir A. In addition, the valves are switched so that the supply of the exhaust gas to the heat reservoir A is stopped, and the exhaust gas is supplied to a heat reservoir B. When the heat reservoir B is heated to a certain degree, the valves are switched again, and the operation is repeated. The switching of the valves is performed at a predetermined time interval.

Fig. 4 shows a rotary regenerative heat exchanger. In this heat exchanger, flow paths disposed on both sides of the heat exchanger are separated into a flow path of an exhaust gas, which is a high-temperature fluid, and a flow path of a mixed gas of DME and H₂O, which is a low-temperature fluid. A central heat reservoir is rotatable, and is rotated after a predetermined time so that a part heated by the high-temperature fluid is moved to the low-temperature fluid side. Since the low-temperature fluid flows through the heated part of the heat reservoir, heat exchange is performed between the exhaust gas and the mixed gas of DME and H₂O.

The heat exchanger shown in Fig. 3 or Fig. 4 may be disposed at the downstream side of the exhaust gas of the heat exchanger shown in Fig. 2, and the mixed gas of DME and H₂O heated in the heat exchanger shown in Fig. 3 or Fig. 4 may be introduced into the heat exchanger shown in Fig. 2. Consequently, the sensible heat of the exhaust gas can be efficiently recovered, and the temperature can be increased to a temperature range in which DME can be pyrolyzed.

A catalyst used for reforming DME to produce hydrogen is filled in the side of the heat exchanger 2 to which the mixed gas of DME and H₂O is supplied. A known catalyst such as alumina, silica; or titania can be used as this catalyst. The type of catalyst used is not particularly limited, and any type of catalyst may be used so long as DME can be reformed to produce hydrogen.

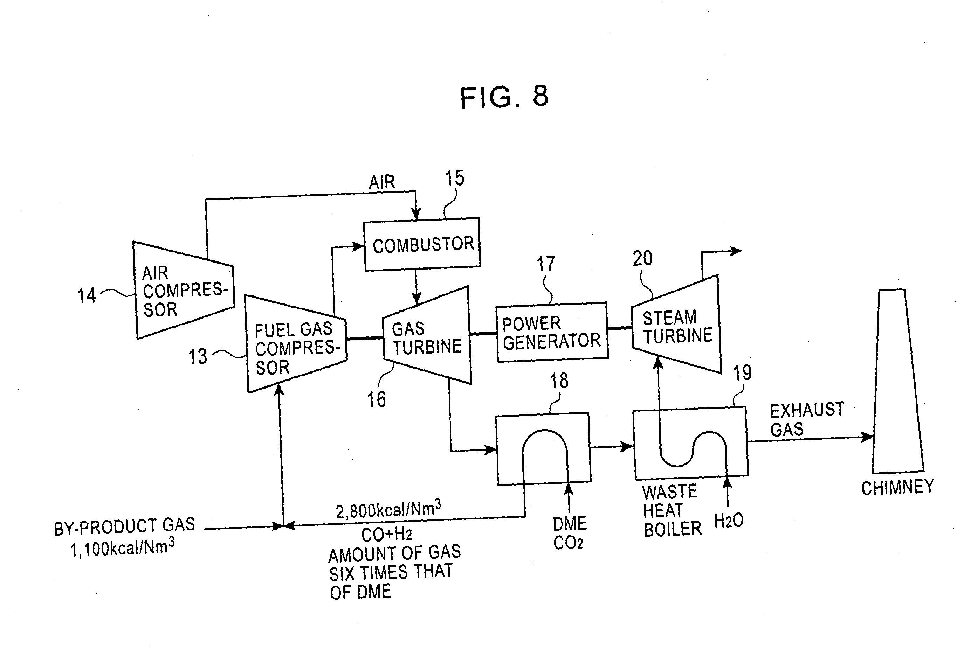

Instead of supplying the mixed gas of DME 6 and H₂O to the heat exchanger 2, a mixed gas of DME and CO₂ may be supplied to the heat exchanger 2, thereby pyrolyzing the mixed gas to H₂ and CO. Thus, the sensible heat of the exhaust gas of the combustion furnace 1 may be recovered as H₂ and CO fuel. This reaction in which DME and CO₂ are reformed to produce the H₂ and CO fuel will be described in detail in a second embodiment shown in Fig. 8.

Fig. 5a shows a fluidized-bed heat exchanger, and Fig. 5b shows a heating-medium-circulating heat exchanger. In the fluidized-bed heat exchanger shown in Fig. 5a, a mixed gas of DME and H₂O or CO₂ flows in a fluidized bed 2a. An exhaust gas at high temperature flows outside the fluidized bed 2a, and heat exchange is performed between the exhaust gas and the mixed gas via the wall surface of the fluidized bed 2a. The fluidized bed 2a is filled with a catalyst 2b, and the catalyst 2b flows according to the flow of the mixed gas. The mixed gas passed through the fluidized bed 2a is reformed to produce H₂ or CO + H₂ by the action of the catalyst 2b.

In the heating-medium-circulating heat exchanger shown in Fig. 5b, a mixed gas of DME and H₂O or CO₂ (described as a fluidized medium in the figure) flows in a circulating bed 2c. In addition, the circulating bed 2c is filled with a catalyst 2e. The mixed gas and the catalyst 2e circulate in the circulating bed 2c through a heat transfer tube 2d. A high-temperature exhaust gas flows outside the heat transfer tube 2d, and heat exchange is performed between the exhaust gas and the mixed gas via the wall surface of the heat transfer tube 2d. The mixed gas passed through the circulating bed 2a is reformed to produce H₂ or CO + H₂ by the action of the catalyst 2e.

In the above-described heat exchanger 2, a reaction represented by CH₃OCH₃ + 3H₂O + 29 kcal → 6H₂ + 2CO₂ is progressed by the catalyst. DME is pyrolyzed to H₂ by this reaction, and the sensible heat of the exhaust gas can be recovered as H₂ fuel.

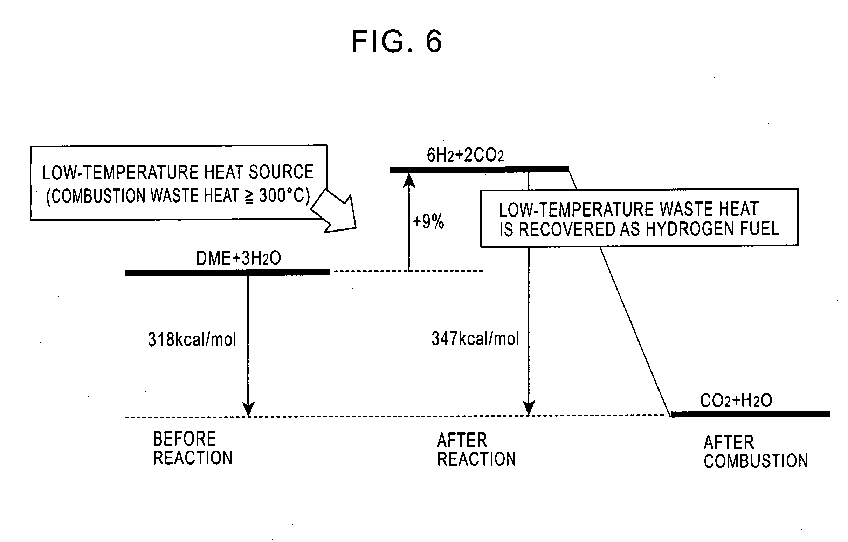

Fig. 6 is a diagram showing a characteristic of reforming of DME to produce hydrogen. When heat is applied to DME + 3H₂O, which is a state before reaction, DME is reformed to produce 6H₂ + 2CO₂ after reaction. According to this diagram, in this step, since the quantity of heat is increased by 29 kcal, which corresponds to a 9% increase, the low-temperature wasted heat can be recovered as hydrogen fuel.

In the above case, when the temperature of the exhaust gas is low (e.g. 300°C or lower), the reaction in which the mixed gas of DME and H₂O is decomposed to H₂ does not easily occur. Furthermore, since the reaction in which DME and H₂O are decomposed to H₂ and CO₂ is an endothermic reaction, disadvantageously, the temperature of the exhaust gas may be further decreased. Consequently, as shown in Fig. 1, a part of DME used for heat recovery is fed to the exhaust system (so-called superheat) so that the quantity of heat of the exhaust gas is increased (for example, the temperature of the exhaust gas is increased to 300°C or higher). Thus, the exhaust gas may be heated by the combustion heat of the fed DMA.

When the temperature of the exhaust gas is in the range of 350°C to 400°C, the reaction in which the mixed gas of DME and H₂O is decomposed to H₂ proceeds. Therefore, in such a case, DME need not be superheated. In addition, the use of a heat exchanger having high efficiency enables DME to be pyrolyzed even at an exhaust gas temperature of 300°C or lower.

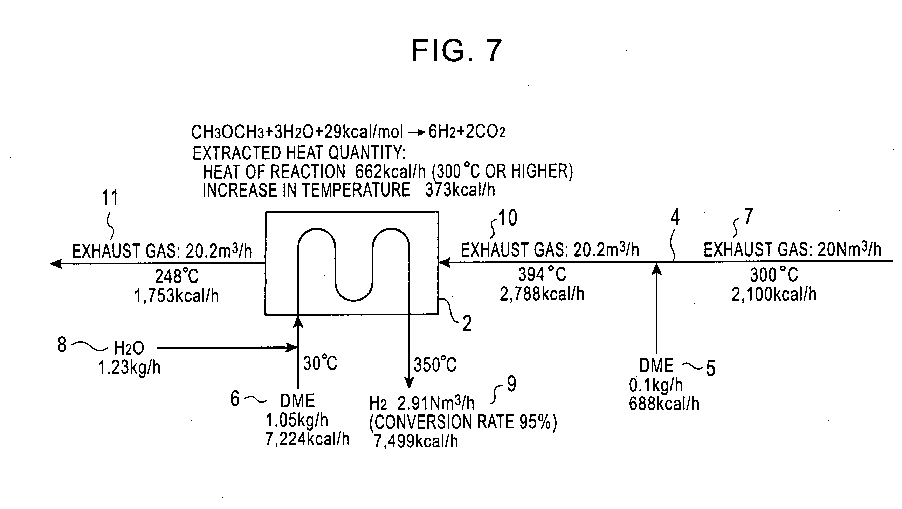

Fig. 7 shows an example of an estimation of the energy conversion efficiency when DME is converted into H₂. In this example, the temperature of an exhaust gas 7 is supposed to be 300°C. If the exhaust gas 7 at 300°C is present at a rate of 20 Nm³/h, the quantity of heat of the exhaust gas 7 is 2,100 kcal/h.

In this example, in order to maintain the temperature of the exhaust gas 7 at 300°C or higher, DME 5 serving as a heat source is superheated at a rate of 0.1 kg/h (688 kcal/h) in the exhaust system 4. In order to provide the exact quantity of heat required for the reaction, the amount of DME 5 fed for the superheat is equal to an amount that supplements the heat of reaction in the endothermic reaction in which the DME 5 is pyrolyzed to H₂ fuel. The temperature of an exhaust gas 10 is increased to 394°C by the superheat of the DME 5.

DME 6 and H₂O 8 at a temperature of 30°C are supplied to the heat exchanger 2. The sensible heat of the exhaust gas 7 is used to increase the temperature of the DME 6 and the H₂O 8 to 300°C. Since the temperature of an exhaust gas 11 discharged from the heat exchanger is 248°C, a quantity of heat corresponding to about 50°C (= 300°C (the temperature of the exhaust gas 7) - 248°C (the temperature of the exhaust gas 11)) of the exhaust gas 11 is used for heating the DME 6 and the H₂O 8.

In the heat exchanger 2, the exhaust gas 10 and the mixed gas of the DME 6 and the H₂O 8 are subjected to heat exchange to reform the DME 6 to produce H₂ fuel 9. In the heat exchanger 2, the DME 6 is fed at a rate of 1.05 kg/h (7,224 kcal/h). The H₂ fuel 9 is obtained at a rate of 2.91 Nm³/h (7,499 kcal/h).

In this example using the exhaust gas 7 at 300°C, the energy conversion efficiency when the DME 6 is converted into the H₂ fuel 9 is calculated as 7,499/(7,224 + 688) × 100 = 94.5%. Thus, the conversion is performed with a high thermal efficiency. The energy conversion efficiency reaches 90% or more even at an exhaust gas temperature in the range of 250°C to 300°C. Herein, the energy conversion efficiency η is defined as η = (combustion energy of resulting H₂ fuel)/(combustion energy of DME used).

In terms of this energy conversion efficiency, 95% of the combustion heat of DME is changed to the combustion heat of H₂. For example, when the H₂ fuel is used in a fuel cell, and the fuel cell itself has a power generation efficiency of about 60%, the combined efficiency including energy used for the generation of H₂ is calculated as 60% × 95% = about 57% (wherein the combined efficiency is represented by power generation energy/fuel (DME) energy). Thus, the power generation can be performed at the above combined efficiency. Consequently, the same power generation efficiency as that of large-scale gas turbine electric power generation equipment in existing electric power plant can be achieved.

As a comparative example, the thermal efficiency in the case where the exhaust gas at 300°C is not used will be estimated. In this case, all the quantity of heat of 2,788 kcal of the exhaust gas 10 fed to the heat exchanger 2 is covered by the combustion heat of DME. That is, DME of a first type is combusted, and DME of a second type is pyrolyzed by the resulting heat. The energy conversion efficiency in this case is calculated as 7,499/(7,224 + 2,788) × 100 = 74.9%, and thus decreased to 80% or less. This is because the heat source used for pyrolyzing the DMF of the second type is obtained by combusting the DME of the first type.

Instead of supplying the mixed gas of the DME 6 and the H₂O 8 to the heat exchanger 2, a mixed gas of DME and CO₂ may be supplied to the heat exchanger 2, thereby pyrolyzing the DME to H₂ and CO. Thus, the sensible heat of the exhaust gas of the combustion furnace may be recovered as H₂ and CO fuel. This reaction in which DME is reformed to produce the H₂ and CO fuel will be described in detail in the second embodiment described below.

Fig. 8 shows a waste heat recovery apparatus according to a second embodiment of the present invention. In this embodiment, the waste heat recovery apparatus is disposed in an exhaust system of a gas turbine combined system. In the gas turbine combined system, a fuel gas is compressed with a fuel gas compressor 13, and the compressed fuel gas is combusted in a combustor 15 together with air compressed with an air compressor 14. The resulting fuel gas at a high temperature and a high pressure is expanded in a gas turbine 16. Thereby, the output is supplied to an external power generator 17.

The temperature of the exhaust gas of the gas turbine 16 is high, and the flow rate of the exhaust gas thereof is also high. A heat exchanger 18 is disposed in the exhaust system of this gas turbine 16. A mixed gas of DME and CO₂ is fed to the heat exchanger 18. Thereby, the DME is pyrolyzed, and the sensible heat of the exhaust gas is recovered as H₂ and CO fuel. The recovered H₂ and CO fuel is mixed with, for example, a by-product gas of a steel works, and is then used as the fuel of the gas turbine 16.

The heat exchanger 18 is filled with a catalyst used for reforming DME to produce the H₂ and CO fuel. A known catalyst such as ruthenium or nickel can be used as this catalyst. The type of catalyst used is not particularly limited, and any type of catalyst may be used so long as DME can be reformed to produce H₂ and CO.

In the heat exchanger 18, a reaction represented by CH₃OCH₃ + CO₂ + 58 kcal → 3H₂ + 3CO proceeds. Since the heat of reaction in this endothermic reaction is larger than that in the reaction in which a mixed gas of DME and H₂O is fed to produce H₂ fuel, the temperature of the exhaust gas must be high. Since the temperature of the exhaust gas of the gas turbine 16 is as high as, for example, 600°C, this exhaust gas can be suitably used for the pyrolysis of DME. Instead of the heat exchanger 18, for example, the heat exchanger 2 shown in Fig. 1 using the reaction of CH₃OCH₃ + 3H₂O + 29 kcal → 6H₂ + 2CO₂ may also be used.

An exhaust gas discharged from the heat exchanger 18 is supplied to a waste heat boiler 19. The waste heat boiler 19 heats water (H₂O) to recover the sensible heat of the exhaust gas as water vapor (H₂O). The water vapor (H₂O) thus obtained is used for rotating a steam turbine 20 combined with the gas turbine 16. When the gas turbine 16 and the team turbine 20 are rotated, the power generator 17 generates electric power.

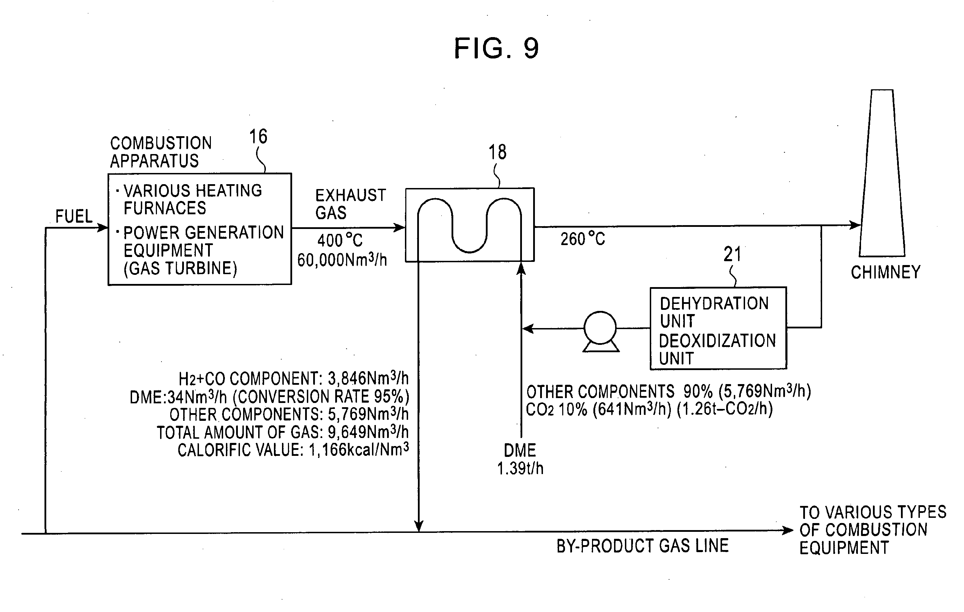

Fig. 9 shows a waste heat recovery apparatus according to a third embodiment of the present invention. In the waste heat recovery apparatus of this embodiment, as in the waste heat recovery apparatus of the second embodiment, a heat exchanger 18 is disposed in an exhaust system of a combustion apparatus such as a gas turbine 16, a mixed gas of DME and CO₂ is fed to the heat exchanger 18. Thereby, the DME is pyrolyzed, and the sensible heat of the exhaust gas of the combustion apparatus is recovered as H₂ and CO fuel. On the other hand, unlike the waste heat recovery apparatus of the second embodiment, in the waste heat recovery apparatus of this embodiment, the exhaust gas containing CO₂ of the combustion apparatus is dehydrated and deoxidized in dehydration and deoxidization units 21, and the dehydrated and deoxidized exhaust gas is supplied to the heat exchanger 18. The concentration of CO₂ used in the reforming need not be 100%. Even a gas containing about 10% of CO₂ can also be reformed and recovered as a fuel gas at a rate of about 1,000 kcal/Nm³.

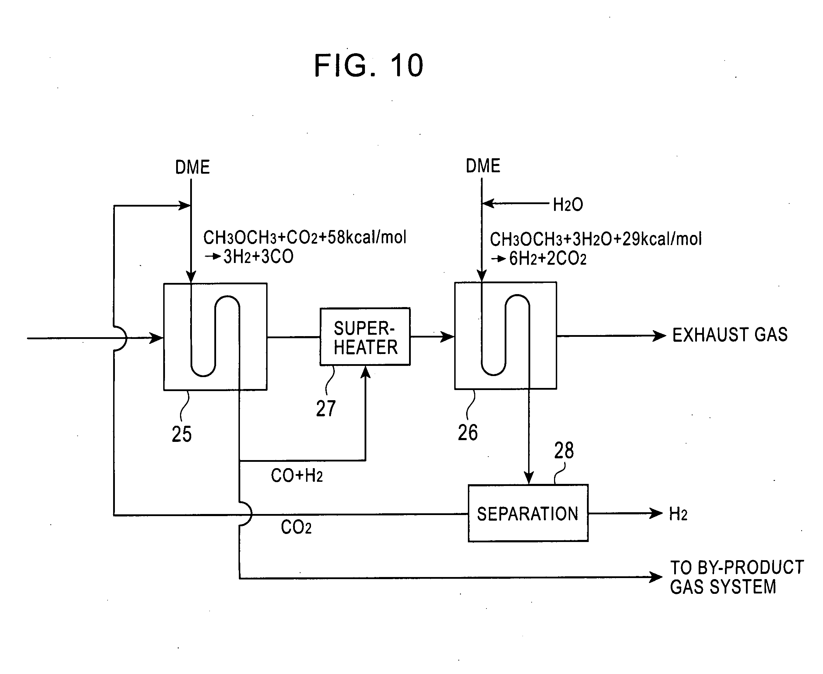

Fig. 10 shows a waste heat recovery apparatus according to a fourth embodiment of the present invention. In this embodiment, a first heat exchanger 25 for recovering DME as H₂ and CO fuel is disposed at the upstream side of an exhaust system of a combustion furnace, and a second heat exchanger 26 for recovering DME as H₂ fuel is disposed at the downstream side thereof. As described above, the heat of reaction in the endothermic reaction in the first heat exchanger 25 is larger than that in the second heat exchanger 26. In order to smoothly progress these endothermic reactions, preferably, the first heat exchanger 25 and the second heat exchanger 26 are disposed in tandem, and the first heat exchanger 25 is disposed at the upstream side and the second heat exchanger 26 is disposed at the downstream side.

The first heat exchanger 25 is filled with a catalyst used for reforming DME to produce the H₂ and CO fuel. A gas prepared by mixing DME with CO₂ is fed to the first heat exchanger 25. In the first heat exchanger 25, the sensible heat of the exhaust gas is recovered as the H₂ and CO fuel. The recovered H₂ and CO fuel is then supplied to, for example, a by-product gas system in a steel works or the like. In order to increase the temperature of the exhaust gas fed to the second heat exchanger 26, a part of the DME may be fed to the exhaust system between the first heat exchanger 25 and the second heat exchanger 26 and may be combusted (i.e., superheated).

The second heat exchanger 26 is filled with a catalyst used for reforming DME to produce the H₂ fuel. A mixed gas of DME and H₂O is fed to the second heat exchanger 26. In the second heat exchanger 26, the sensible heat of the exhaust gas is recovered as the H₂ fuel. CO₂ discharged from the second heat exchanger 26 together with the H₂ fuel is separated in a separating unit 28. The separated CO₂ is supplied to the first heat exchanger 25 as a raw material. Since the concentration of the separated CO₂ is high, a gas other than the CO₂ need not be heated in the first heat exchanger 25, and thus the decomposition reaction of DME can be efficiently performed. In contrast, when an exhaust gas is fed in the first heat exchanger 25 together with DME, N₂ and O₂ are also heated in addition to CO₂, resulting in a decrease in the recovery efficiency of waste heat. This apparatus may be used instead of the heat exchanger 18 of the gas turbine combined system shown in Fig. 8.

The composition and the calorific value of the H₂ and CO fuel obtained in this embodiment are similar to those of a by-product gas in a steel works, the fuel can be used as an alternative to the by-product gas in the case where the amount of by-product gas generated is low because of stopping of the operation of a blast furnace or the like without remodeling existing combustion equipment. Consequently, the operation efficiency of the by-product gas can be increased in the steel works. The reason for this will be described below.

The by-product gas is a mixed gas containing 4,500 kcal/Nm³ of coke oven gas, 750 kcal/Nm³ of blast furnace gas, and 2,000 kcal/Nm³ of converter gas and is primarily composed of H₂ and CO. The fuel gas obtained in this embodiment contains 2,800 kcal/Nm³ of H₂ and CO fuel and 1,800 to 2,580 kcal/Nm³ of H₂ fuel. The components and the calorific value of the fuel gas of this embodiment are similar to those of the by-product gas. Therefore, when this embodiment is applied to an exhaust gas system of a combustion furnace in a steel works and the resulting H₂ fuel or H₂ and CO fuel is mixed in a by-product gas system, the fuel can be used as an alternative to the by-product gas without remodeling existing combustion equipment.

In steel workss, which are considered to be an example of high-energy-consumption plants, the amount of waste heat is also large, and about 40% of the energy generated in each production process is discharged as a by-product gas. However, since the amount of by-product gas significantly fluctuates, it is difficult to use a high-efficiency gas turbine for power generation that converts the by-product gas to fuel in steel workss. Instead, the amount of steam generated is stabilized by combusting fuel oil or the like so as to compensate for the fluctuation of the amount of by-product gas, and electric power is generated with a steam turbine. When the H₂ fuel or H₂ and CO fuel obtained in this embodiment is mixed in the by-product gas system, the amount of by-product gas generated can be stabilized. Consequently, a machine with high efficiency, such as a gas turbine for power generation, can be easily introduced, and thus the operation efficiency of the by-product gas in steel works can be increased.

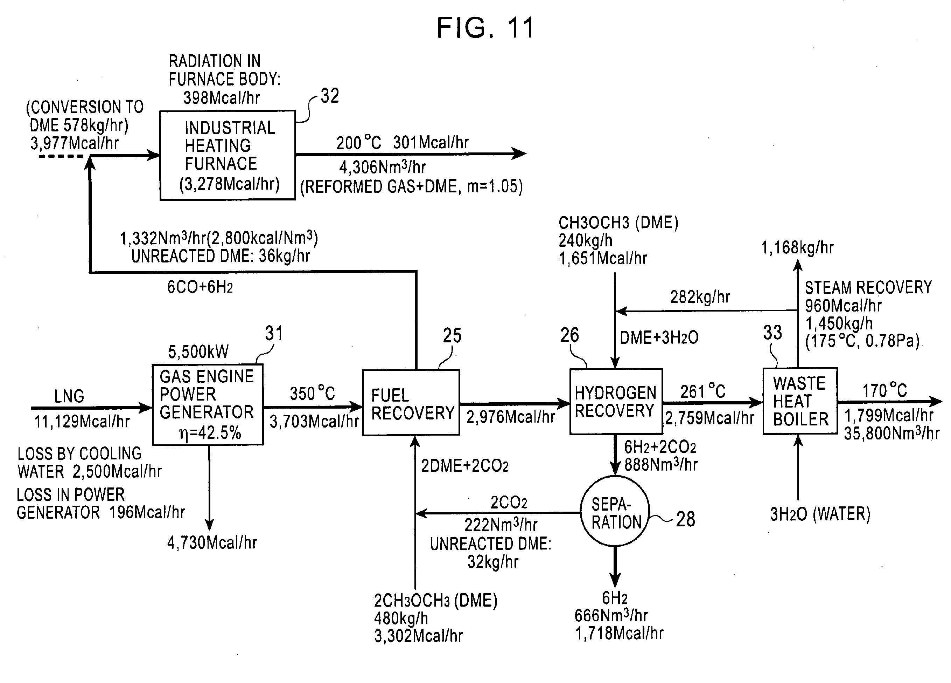

Fig. 11 is a diagram of a waste heat recovery system according to a first embodiment of the present invention. In this waste heat recovery system, a gas engine power generator 31 is used as a combustion apparatus, and a first heat exchanger 25 and a second heat exchanger 26 are provided in an exhaust system of the gas engine power generator 31, as in the above-described third embodiment.

The first heat exchanger 25 is filled with a catalyst used for reforming DME to produce H₂ and CO fuel. A gas prepared by mixing DME and CO₂ is fed to the first heat exchanger 25. In the first heat exchanger 25, the sensible heat of the exhaust gas is recovered as the H₂ and CO fuel. On the other hand, the second heat exchanger 26 is filled with a catalyst used for reforming DME to produce H₂ fuel. A mixed gas of DME and H₂O is fed to the second heat exchanger 26. In the second heat exchanger 26, the sensible heat of the exhaust gas is recovered as the H₂ fuel. CO₂ discharged from the second heat exchanger 26 together with the H₂ fuel is separated in a separating unit 28. The separated CO₂ is supplied to the first heat exchanger 25 as a raw material.

The H₂ and CO fuel recovered in the first heat exchanger 25 is used as fuel of a heating furnace 32. A combustion apparatus such as a boiler can also be used instead of the heating furnace 32. A waste heat boiler 33 is provided at the downstream side of the second heat exchanger 26, and water vapor recovered in the waste heat boiler 33 is supplied to the second heat exchanger 26.

In the waste heat recovery system of this embodiment, the gas engine power generator 31 is used as a combustion apparatus, and not DME but liquefied natural gas (LNG) is used as the fuel of the gas engine power generator. In this embodiment, since DME is supplied to the first and second heat exchangers 25 and 26, it is assumed that DME may also be used as the fuel of the gas engine power generator 31. However, when DME is combusted as fuel, the CO₂ emission is larger than that of LNG by about 18% (the carbon emission factor of fuel of LNG is 64.06 g-C/Mcal, whereas that of DME is 75.60 g-C/Mcal). Accordingly, when DME is used as the fuel of the power generator 31, carbon emission is increased from the standpoint of the above relationship of the carbon emission factor of the fuels. Therefore, in this embodiment, LNG is used as the fuel of the power generator 31 in order to reduce the carbon emission.

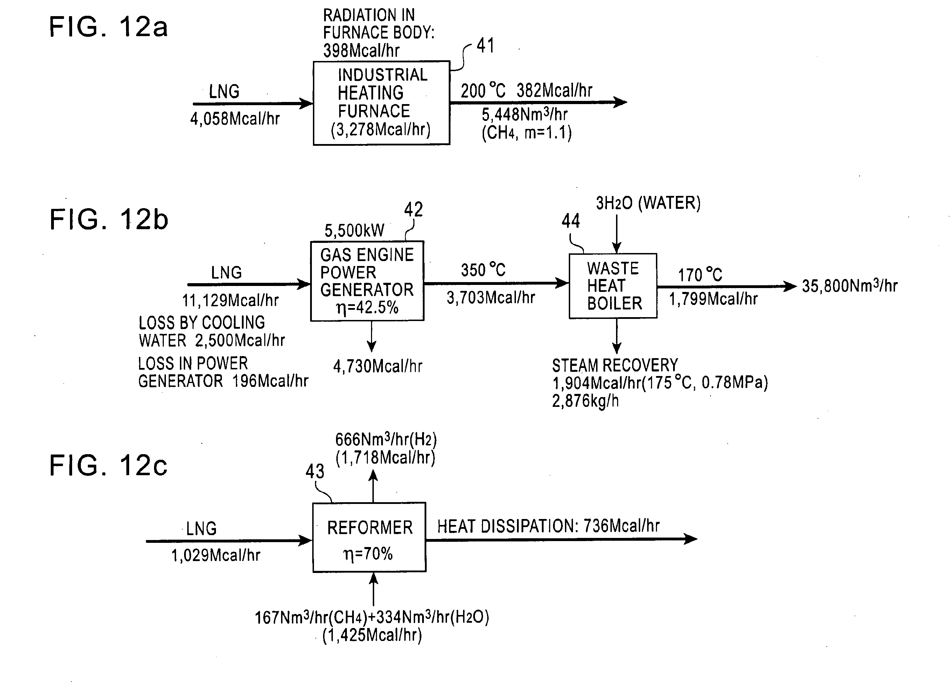

A description will be made of the comparison between the waste heat recovery system in which not DME but LNG is used as the fuel of the power generator 31, which consumes a large amount of fuel, (hereinafter, this waste heat recovery system is referred to as "combined waste heat recovery system of LNG and DME") and a waste heat recovery system in which only LNG is used (see Fig. 12). These two waste heat recovery systems are similar in that power generation is performed with a power generator to produce the same output, the same amount of quantity of heat is obtained in a heating furnace, and the same amount of hydrogen is produced.

As a comparative example, Fig. 12 shows diagrams of a system in which only LNG is used. In this system, LNG is used as the fuel of a heating furnace 41, LNG is used as the fuel of a power generator 42, and furthermore, LNG is reformed in a reformer 43 to produce hydrogen. A waste heat boiler 44 is provided in an exhaust system of the power generator 42, and waste heat of the power generator 42 is recovered as steam. A quantity of heat of 3,278 Mcal/hr is obtained in the heating furnace, an output of 5,500 kW is obtained in the power generator, and hydrogen is produced at a rate of 666 Nm³/hr. In order to obtain these quantities of heat, output, and hydrogen, LNG is consumed and CO₂ is emitted in the amounts shown in Table 1 below.

**Table 1**

| | LNG consumption | CO₂ emission |
|---|---|---|
| Fuel consumption in heating furnace | 4,058 Mcal/h | 953 Kg/h |
| Hydrogen production (666 Nm³) | 2,454 Mcal/h | 576 Kg/h |
| Fuel consumption in power generator | 11,129 Mcal/h | 2,614 Kg/h |
| Total | 17,641 Mcal/h | 4,144 Kg/h |

Users who use waste heat recovery systems desire that both the fuel consumption and the CO₂ emission can be reduced. A reduction of fuel consumption can achieve a reduction in cost. Furthermore, now that COP3 (the 3rd Session of the Conference of the Parties to the United Nations Framework Convention on Climate Change) has been ratified in the Kyoto Protocol, CO₂ emission must also be reduced from a social standpoint. In view of this background, the combined waste heat recovery system of LNG and DME shown in Fig. 11 is devised. In the combined waste heat recovery system of LNG and DME shown in Fig. 11, LNG is used as the fuel of the gas engine power generator 31, which consumes a large amount of fuel, and DME is used for the heating furnace 32 and hydrogen production. In such a case, the fuel consumption and the CO₂ emission are shown in Table 2 below.

**Table 2**

| | | Fuel consumption | CO₂ emission |
|---|---|---|---|
| DME | Fuel consumption in heating furnace | 3,302 Mcal/h | 915 Kg/h |
| | Hydrogen production (666 Nm³) | 1,651 Mcal/h | 458 Kg/h |
| LNG | Fuel consumption in power generator | 11,129 Mcal/h | 2,614 Kg/h |
| Total | | 16,082 Mcal/h | 3,987 Kg/h |

Referring to Table 2, the combination of LNG and DME can reduce both the CO₂ emission and the fuel consumption compared with those in the process in which only LNG is used. It is believed that the CO₂ emission can be reduced because waste heat of the gas engine power generator 31 is changed to fuel, and the CO₂ emission corresponding to this waste heat is reduced. That is, CO₂ generated from the second heat exchanger 26 is separated and is supplied to the first heat exchanger 25, and the CO₂ is then mixed with DME in the first heat exchanger 25, thereby converting it to CO fuel again. Accordingly, CO₂ circulates in the waste heat recovery system, and thus the CO₂ emission is reduced.

Table 3 summarizes the comparison of the above two waste heat recovery systems. Case 1 represents the waste heat recovery system in which only LNG is used, and case 2 represents the waste heat recovery system in which LNG and DME is combined. In case 2, the fuel can be reduced by 9% and the CO₂ emission can also be reduced by 4%.

**Table 3**

| | | Case 1 (Only LNG is used.) | Case 2 (LNG and DME are combined.) |
|---|---|---|---|
| Private power generation | | Natural gas (11,129 Mcal/h) | Natural gas (11,129 Mcal/h) |
| Heating furnace | | Natural gas (4,058 Mcal/h) | Natural gas (3,302 Mcal/h) |
| Hydrogen generation | | Natural gas (2,454 Mcal/h) | Natural gas (1,651 Mcal/h) |
| Total | Reduction ratio of fuel | Base (17,641 Mcal/h) | -9% (16,082 Mcal/h) |
| | Reduction ratio of CO₂ emission | Base (4,144 Kg-CO₂/h) | -4% (3,987 Kg-CO₂/h) |

A reduction in fuel consumption brings users cost benefits. If the money saved by this reduction in fuel consumption can be used as a financial resource for popularizing DME obtained from biomass, wastes, petroleum residues, coal bed methane, or coal (hereinafter referred to as "DME derived from biomass"), the DME derived from biomass can be commercially distributed on the basis of the economical efficiency thereof in the form of fuel in which a certain percentage of the DME derived from biomass is mixed with DME derived from natural gas. Popularization of the DME derived from biomass can further reduce CO₂ generated by society as a whole. The DME derived from biomass is produced by gasifying biomass or the like in a gasifier to CO + H₂ followed by a known DME synthetic reaction in the presence of a catalyst.

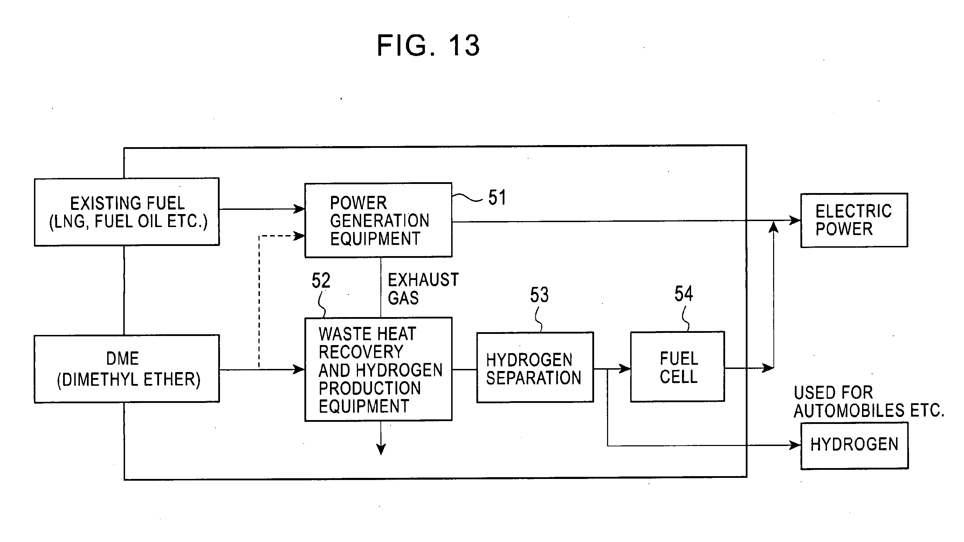

Fig. 13 is a diagram of a waste heat recovery system according to a second embodiment of the present invention. The waste heat recovery system of this embodiment includes electric power generation equipment 51 that generates electric power using existing fuel such as LNG or fuel oil, and waste heat recovery-hydrogen production equipment 52 that recovers the sensible heat of an exhaust gas of the electric power generation equipment 51. The waste heat recovery-hydrogen production equipment 52 reforms supplied DME to produce H₂ + CO₂ or H₂ + CO fuel as in the above-described waste heat recovery apparatus. The H₂ fuel thus produced is separated by a hydrogen-separating unit 53, and is then supplied to a fuel cell 54 or used as fuel of a fuel cell vehicle. This waste heat recovery system is controlled, for example, as follows. During a period in which there is a high demand for electric power (daytime), the hydrogen produced in the waste heat recovery-hydrogen production equipment 52 is entirely fed to the fuel cell 54 and is subjected to energy conversion to produce electric power. In contrast, during a period in which there is a low demand for electric power (nighttime), the hydrogen produced in the waste heat recovery-hydrogen production equipment 52 is stored as fuel of the fuel cell vehicle. As described above, by recovering the waste heat generated in power generation as hydrogen, a power generation system having a load adjusting function (i.e., in which either hydrogen production or power generation can be selected) can be realized.

The application of the waste heat recovery apparatus of the present invention is not limited to the fields of power generation and mining industry. The waste heat recovery apparatus of the present invention can be provided in an exhaust system of combustion apparatuses such as furnaces used in various industries, e.g., petrochemical, paper and pulp, nonferrous metal, cement, ceramic, and transportation industries; internal combustion engines; and electric power generation equipment. The waste heat recovery apparatus of the present invention can also be provided in an exhaust system of burning devices for air-conditioning, kitchens, or hot-water supply in the consumer and commercial fields. Furthermore, the waste heat recovery apparatus of the present invention is preferably applied to an exhaust system in which the temperature of the exhaust gas is 300°C or higher, but can also be effectively applied to an exhaust system in which the temperature of the exhaust gas is 300°C or lower.

The application of the waste heat recovery system of the present invention is not limited to the case where a power generator, a heating furnace, and a hydrogen reformer are present. The waste heat recovery system of the present invention can be applied to various waste heat recovery systems as long as a waste heat recovery apparatus is installed in an exhaust system of an internal combustion engine or electric power generation equipment. For example, in an aspect of the present invention in which steam is not necessary, a waste heat boiler may not be present. Furthermore, the heating furnace in the waste heat recovery system of the present invention may be a burning device for air-conditioning, a kitchen, or hot-water supply instead of an industrial heating furnace, or may be replaced with a fuel cell.

Furthermore, in the method of recovering waste heat of the present invention, DME may be reformed to produce H₂ fuel or H₂ and CO fuel by directly feeding DME to an exhaust system filled with a catalyst without providing a heat exchanger.

## Claims

1. A waste heat recovery apparatus wherein a heat exchanger filled with a catalyst used for reforming dimethyl ether is provided in an exhaust system of a combustion apparatus such as a furnace, an internal combustion engine, or an electric power generation equipment; and a mixed gas of dimethyl ether and H₂O is fed to the heat exchanger, thereby pyrolyzing the dimethyl ether and recovering the sensible heat of an exhaust gas of the combustion apparatus as H₂ fuel.

2. The waste heat recovery apparatus according to claim 1, wherein dimethyl ether is fed to the exhaust system so as to increase the temperature of the exhaust gas of the combustion apparatus.

3. A waste heat recovery apparatus wherein a heat exchanger filled with a catalyst used for reforming dimethyl ether is provided in an exhaust system of a combustion apparatus such as a furnace, an internal combustion engine, or electric power generation equipment; and a mixed gas of dimethyl ether and CO₂ is fed to the heat exchanger, thereby pyrolyzing the dimethyl ether and recovering the sensible heat of an exhaust gas of the combustion apparatus as H₂ and CO fuel.

4. The waste heat recovery apparatus according to claim 3, wherein the exhaust gas containing CO₂ of the combustion apparatus is dehydrated and deoxidized, and a mixed gas of the dehydrated and deoxidized exhaust gas and dimethyl ether is fed to the heat exchanger.

5. A waste heat recovery apparatus wherein a first heat exchanger filled with a catalyst used for reforming dimethyl ether is provided in an exhaust system of a combustion apparatus such as a furnace, an internal combustion engine, or electric power generation equipment; a mixed gas of dimethyl ether and CO₂ is fed to the first heat exchanger, thereby pyrolyzing the dimethyl ether and recovering the sensible heat of an exhaust gas of the combustion apparatus as H₂ and CO fuel; a second heat exchanger filled with a catalyst used for reforming dimethyl ether is provided in the exhaust system; and a mixed gas of dimethyl ether and H₂O is fed to the second heat exchanger, thereby pyrolyzing the dimethyl ether and recovering the sensible heat of the exhaust gas of the combustion apparatus as H₂ fuel.

6. The waste heat recovery apparatus according to claim 5, wherein the H₂ and CO fuel recovered in the first heat exchanger is fed to the exhaust system disposed between the first heat exchanger and the second heat exchanger so as to increase the temperature of the exhaust gas of the combustion apparatus to be fed to the second heat exchanger.

7. The waste heat recovery apparatus according to claim 5 or 6, wherein CO₂ produced together with the H₂ fuel recovered in the second heat exchanger is separated, and the separated CO₂ is supplied to the first heat exchanger.

8. The waste heat recovery apparatus according to any one of claims 1 to 7, wherein the combustion apparatus is a gas turbine, a gas engine, or a diesel engine, and the recovered H₂ fuel or the H₂ and CO fuel is used as fuel of the gas turbine, the gas engine, or the diesel engine.

9. The waste heat recovery apparatus according to any one of claims 1 to 7, wherein the recovered H₂ fuel or the H₂ and CO fuel is used as an alternative to a by-product gas in a steel works.

10. The waste heat recovery apparatus according to any one of claims 1 to 7, wherein the recovered H₂ fuel or the H₂ and CO fuel is used as fuel of a fuel cell.

11. A waste heat recovery system comprising a combustion apparatus such as a furnace, an internal combustion engine, or electric power generation equipment; and a waste heat recovery apparatus for recovering the sensible heat of an exhaust gas of the combustion apparatus, wherein, in the waste heat recovery apparatus, a heat exchanger filled with a catalyst used for reforming dimethyl ether is provided in an exhaust system of the combustion apparatus, and a mixed gas of dimethyl ether and H₂O is fed to the heat exchanger, thereby pyrolyzing the dimethyl ether and recovering the sensible heat of the exhaust gas of the combustion apparatus as H₂ fuel.

12. A waste heat recovery system comprising a combustion apparatus such as a furnace, an internal combustion engine, or electric power generation equipment; and a waste heat recovery apparatus for recovering the sensible heat of an exhaust gas of the combustion apparatus, wherein, in the waste heat recovery apparatus, a heat exchanger filled with a catalyst used for reforming dimethyl ether is provided in an exhaust system of the combustion apparatus, and a mixed gas of dimethyl ether and CO₂ is fed to the heat exchanger, thereby pyrolyzing the dimethyl ether and recovering the sensible heat of the exhaust gas of the combustion apparatus as H₂ and CO fuel.

13. A waste heat recovery system comprising a combustion apparatus such as a furnace, an internal combustion engine, or electric power generation equipment; and a waste heat recovery apparatus for recovering the sensible heat of an exhaust gas of the combustion apparatus, wherein, in the waste heat recovery apparatus, a first heat exchanger filled with a catalyst used for reforming dimethyl ether is provided in an exhaust system of the combustion apparatus, a mixed gas of dimethyl ether and CO₂ is fed to the first heat exchanger, thereby pyrolyzing the dimethyl ether and recovering the sensible heat of the exhaust gas of the combustion apparatus as H₂ and CO fuel, a second heat exchanger filled with a catalyst used for reforming dimethyl ether is provided in the exhaust system, a mixed gas of dimethyl ether and H₂O is fed to the second heat exchanger, thereby pyrolyzing the dimethyl ether and recovering the sensible heat of the exhaust gas of the combustion apparatus as H₂ fuel, CO₂ produced together with the H₂ fuel recovered in the second heat exchanger is separated, and the separated CO₂ is supplied to the first heat exchanger.

14. The waste heat recovery system according to any one of claims 11 to 13, wherein the combustion apparatus uses liquefied natural gas (LNG) as fuel.

15. The waste heat recovery system according to any one of claims 11 to 14, further comprising a heating furnace or a combustion apparatus for combusting the recovered H₂ and CO fuel.

16. The waste heat recovery system according to any one of claims 13 to 15, further comprising a waste heat boiler disposed at a downstream side of the second heat exchanger of the exhaust system, and water vapor recovered in the waste heat boiler is supplied to the second heat exchanger.

17. A method of recovering waste heat comprising feeding a mixed gas of dimethyl ether and H₂O to a heat exchanger that is filled with a catalyst used for reforming the dimethyl ether and that is provided in an exhaust system of a combustion apparatus such as a furnace, an internal combustion engine, or electric power generation equipment, thereby pyrolyzing the dimethyl ether and recovering the sensible heat of an exhaust gas of the combustion apparatus as H₂ fuel.

18. A method of recovering waste heat comprising feeding a mixed gas of dimethyl ether and CO₂ to a heat exchanger that is filled with a catalyst used for reforming the dimethyl ether and that is provided in an exhaust system of a combustion apparatus such as a furnace, an internal combustion engine, or electric power generation equipment, thereby pyrolyzing the dimethyl ether and recovering the sensible heat of an exhaust gas of the combustion apparatus as H₂ and CO fuel.

19. A method of recovering waste heat comprising feeding a mixed gas of dimethyl ether and CO₂ to a first heat exchanger that is filled with a catalyst used for reforming the dimethyl ether and that is provided in an exhaust system of a combustion apparatus such as a furnace, an internal combustion engine, or electric power generation equipment, thereby pyrolyzing the dimethyl ether and recovering the sensible heat of the exhaust gas of the combustion apparatus as H₂ and CO fuel; feeding a mixed gas of dimethyl ether and H₂O to a second heat exchanger that is filled with a catalyst used for reforming dimethyl ether and that is provided in the exhaust system, thereby pyrolyzing the dimethyl ether and recovering the sensible heat of the exhaust gas of the combustion apparatus as H₂ fuel; separating CO₂ produced together with the H₂ fuel recovered in the first heat exchanger; and supplying the separated CO₂ to the second heat exchanger.

20. A method of recovering waste heat comprising feeding dimethyl ether to an exhaust system of a combustion apparatus such as a furnace, an internal combustion engine, or electric power generation equipment, the exhaust system being filled with a catalyst used for reforming the dimethyl ether, thereby pyrolyzing the dimethyl ether and recovering the sensible heat of an exhaust gas of the combustion apparatus as H₂ fuel.

21. A method of recovering waste heat comprising feeding dimethyl ether to an exhaust system of a combustion apparatus such as a furnace, an internal combustion engine, or electric power generation equipment, the exhaust system being filled with a catalyst used for reforming the dimethyl ether, thereby pyrolyzing the dimethyl ether and recovering the sensible heat of an exhaust gas of the combustion apparatus as H₂ and CO fuel.
